# EUROPÄISCHE PATENTSCHRIFT

(11) **EP 2 977 855 B1**
(45) Veröffentlichungstag und Bekanntmachung des Hinweises auf die Patenterteilung: **28.08.2019**
(21) Anmeldenummer: 14178230.0
(22) Anmeldetag: 23.07.2014
(51) Int. Cl.: G06F 3/01, G06F 3/03

(54) **Virtuelle Tastatur und Eingabeverfahren für eine virtuelle Tastatur**
Virtual keyboard and input method for a virtual keyboard
Clavier virtuel et procédé de saisie pour un clavier virtuel

(43) Veröffentlichungstag der Anmeldung: 27.01.2016
(73) Patentinhaber: Wincor Nixdorf International GmbH, 33106 Paderborn (DE)
(72) Erfinder: Urban, Patrick, 33102 Paderborn (DE)

(56) Entgegenhaltungen:
- EP-A1- 1 637 975
- WO-A2-2013/049248
- US-A1- 2010 138 797
- US-A1- 2012 174 041
- US-A1- 2013 242 262
- US-A1- 2013 346 168

## Beschreibung

Die Erfindung betrifft die Steuerung einer virtuellen Tastatur.

Der Einsatz von virtuellen Tastaturen erfolgt bei einer Vielzahl von Systemen von Wearables wie Google Glass per Augmented Reality oder andere Systeme, die eine virtuelle Tastatur auf einen Gegenstand oder eine Fläche abbilden.

Unter erweiterter Realität (auch englisch augmented reality) versteht man die computergestützte Erweiterung der Realitätswahrnehmung. Diese Information kann alle menschlichen Sinnesmodalitäten ansprechen. Häufig wird jedoch unter erweiterter Realität nur die visuelle Darstellung von Informationen verstanden, also die Ergänzung von Bildern oder Videos mit computergenerierten Zusatzinformationen oder virtuellen Objekten mittels Einblendung/Überlagerung.

Im Bereich der Wearables, insbesondere Google Glass, werden nach wie vor Methoden für die Texteingabe gesucht, die trotz der geringen Ausmaße der Geräte effizient zu bedienen sind. Neben in die Kleidung eingearbeiteten Tastaturen werden Projektionen von Eingabeflächen pilotiert, ohne jedoch den entscheidenden Durchbruch erzielt zu haben. Als ein Quasistandard für Wearables hat sich die Spracheingabe etabliert, die jedoch in vielen Umgebungen nicht praktikabel oder gar unerwünscht ist. Grundsätzlich bestehen solche Systeme aus einem Augmented Device, das mindestens eine Kamera enthält und das von einem Software Programm, z.B. einer "Augmented Input APP" betrieben wird. Auch kann die "Augmented Input APP" Bestandteil einer anderen, auf dem Augmented Device lauffähigen APP sein.

In das Kamerabild oder (im Falle von Google Glass) durch das Augmented Device sichtbare Bild werden digitale Zusatzinformationen eingebettet, in unserem Fall z.B. Buttons oder auch eine reduzierte oder komplette virtuelle Tastatur, ggf. mit allen von der Lokalisierung abhängigen Tasten. Diese Zusatzinformationen können sowohl statisch das Kamerabild überlagern, befinden sich also immer im selben Bildabschnitt mit derselben Bildgröße, oder aber sie werden an definierten Markern der gefilmten Umgebung (Environment, z.B. Aufkleber, Ausdrucke mit speziellen Zeichen oder weiße Flächen) platziert und dort maßstabsgetreu "festgemacht". Der Einfachheit halber sprechen wir im Folgenden nur von einer virtuellen Tastatur.

Eingaben werden vom User über die Input Devices, insbesondere die Hände oder Finger des Users gemacht. Im Folgenden beschränken wir uns in der Darstellung auf Finger, obwohl natürlich auch z.B. Kugelschreiber, Zeigestöcke oder Handschuhe mit Markern genutzt werden könnten.

Die Finger werden vom User in das Kamerabild gehalten, so dass die Kamera(s) als Sensor(en) fungieren können und die Finger sowohl als solche erkennen können, als auch mit ihrer Hilfe die Position der Finger im Bild ermittelt werden kann.

Wird z.B. von der Augmented Input APP mit Hilfe der Kamera(s) eine Fingerspitze über einem Buchstaben des virtuellen Keyboards erkannt, so kann auf diesem Wege ein Buchstabe als Eingabedatum bestimmt werden.

Der Vollständigkeit halber soll erwähnt werden, dass typischerweise die digitalen Zusatzinformationen das Kamerabild überlagern und daher auch das virtuelle Keyboard nicht nur das die Umgebung, sondern auch die Finger visuell überlagert. Um den Blick des Users auf seine Finger nicht zu stören, kann daher das virtuelle Keyboard mit einem Transparenz-Level versehen werden, so dass es (leicht) durchscheinend in das Kamerabild projiziert wird. Dadurch kann der User sowohl das virtuelle Keyboard als auch seine Finger erkennen.

Die Druckschrift EP1637975 A1 offenbart ein Augmented-Reality-Gerät, welches verschiedenen Eingabemodalitäten, beispielsweise die Detektion von Augenbewegungen, Muskelkontraktionen oder neuronaler Aktivität, bereitstellt. Eine Eingabemodalität wird zur Selektion eines Knopfes verwendet und eine andere Eingabemodalität wird zur Eingabe des selektierten Knopfes verwendet.

Die Druckschriften US 2010/138797 A1, US 2012/174041 A1, WO 2013/049248A2, US 2013/346168 A1, US 2013/242262 A1 offenbaren weitere unterschiedliche Systeme die virtuelle Tastaturen bereitstellen.

Aufgabe der Erfindung ist eine Bereitstellung eines flexiblen Systems für einen Augmented Input.

### Überblick über die Erfindung:

Diese Beschreibung beschreibt mehrere Ausführungsformen, welche teilweise als erfindungsgemäß oder als Erfindung bezeichnet werden.

Die beschriebenen Ausführungsformen sind jedoch nicht so zu verstehen, dass sie notwendigerweise die Erfindung definieren. Die beschriebenen Ausführungsformen definieren nur dann die Erfindung, wenn sie in den Umfang der beigefügten Ansprüche fallen. Daher ist der Schutzumfang der vorliegenden Erfindung ausschließlich durch die beigefügten Ansprüche definiert.

Die vorliegende Anmeldung hat das Ziel einer beschleunigten Texteingabe mithilfe von Augmented Reality, derart, dass der Eingabeprozess (bei traditionellen PCs der "Tastaturanschlag") aufgeteilt wird in die Bestandteile "Buchstabenauswahl" und "Eingabeauslösung" (Übernehmen des ausgewählten Buchstabens als Eingabeelement in ein Computerprogramm/eine APP),

Das vorgestellte Verfahren für "Augmented Devices", wie z.B. Google Glass, trennt die heute üblichen Verfahren für die Eingabe von Texten über eine virtuelle Tastatur in zwei unabhängige Komponenten für die Auswahl eines Buchstabens bzw. den Auslöseimpuls für das Auslesen des ausgewählten Buchstabens und ermöglicht so eine schnelle Eingabe von Texten mithilfe zweier verschiedener Technologien, die beliebig nach den Vorstellungen des Benutzers kombiniert werden können.

Die vorliegende Erfindung umfasst ein Eingabeverfahren eines Augmented-Reality-Gerätes mit einer Anzeigeeinheit und einer

Kameraeinheit, wobei die Anzeigeeinheit mindestens eine virtuelle Taste darstellt. In der Regel dient die Kamera dazu, das Verhalten des Benutzers zu erfassen. Auf einem Bildschirm, auf den der Benutzer schauen kann, sieht der Benutzer in der Regel die Tastatur und gegebenenfalls auch sogar die Aufnahme seiner eigenen Finger, die auf die virtuellen Tasten bzw. die Tastatur zugreifen, um ein optisches Feedback zu erhalten.

Das Verfahren ist im Wesentlichen dadurch gekennzeichnet, dass es in zwei Komponenten bzw. Verfahrensschritte zerlegt wurde, die durch unterschiedliche Methoden zu implementieren sind.

Hierbei handelt es sich um das
- Feststellen, welche virtuelle Taste als Eingabe durch einen Benutzer ausgewählt wurde; und
- Feststellen, ob die Eingabe durch den Benutzer ausgelöst wurde.

Im klassischen Tastaturbereich kann man somit davon sprechen, ob erstens der Finger die Taste berührt und zweitens die Taste heruntergedrückt wurde.

Da es sich in der Regel um eine virtuelle Taste handelt, die physikalisch nicht vorhanden ist, reicht das Erkennen der Berührung der Taste durch einen Finger nicht aus. Vielmehr bedarf es noch eines Schrittes, ob die Taste tatsächlich auch gedrückt wurde bzw. gedrückt werden sollte.

Aus diesem Grunde gibt es eine Reihe von Methoden/ Eingabemodalitäten, die alternativ oder in Kombination miteinander genutzt werden können, um die beiden Verfahrensschritte durchzuführen. Es ist somit denkbar, dass eine Vielzahl von Methoden/ Eingabemodalitäten zur Erkennung der Auswahl einer virtuellen Taste in Kombination mit einem oder mehreren Verfahren zum Auslösen dieser Taste kombiniert werden können, und umgekehrt. Diese Kombination kann aufgrund von Parametern innerhalb des Gerätes bestimmt werden. Auch kann es ein Regelwerk geben, das abhängig von Umgebungsparametern, Uhrzeiten, Lichtverhältnissen und anderen äußerlichen und inneren Zuständen des Gerätes bestimmte Methoden/Eingabemodalitäten für die Verfahrensschritte aktiviert oder deaktiviert.

Im Folgenden werden beispielhaft einige Methoden/ Eingabemodalitäten zur Erkennung, welche virtuelle Taste als Eingabe durch einen Benutzer ausgewählt wurde, beschrieben:
a) mit Hilfe eines Augen-Trackers wird die virtuelle Taste erkannt, auf die der Benutzer seine Augen fokussiert. Dieser Tracker kann eine Kamera sein, die entsprechend die Pupillen und die Augenbewegungen erkennt und daraus die Tastatur bestimmt, die ausgewählt wurde. Hierbei kann auch ein Feedback für den Benutzer auf der Anzeigeeinheit gegeben werden, in Form eines Auswahl Cursors bzw. Auswahl Indikators, so dass dieser seine Augen auch entsprechend nachführen kann, falls es notwendig ist, und das System nicht exakt seine Auswahl bestimmen kann. Andere Verfahren sind ebenfalls denkbar auf diesem Gebiet.
b) mit Hilfe eines Finger-Trackers werden Finger-Spitzen und/oder die Spitze eines Zeigestabs erkannt, wobei bei Überlagerung der Finger-Spitzen mit einer virtuellen Taste eine Auswahl vorliegt. Auch für diesen Ansatz kann die Kamera verwendet werden und kann ebenfalls vorzugsweise die Finger mit der virtuellen Tastatur in der Anzeigeeinheit überlagern. Bei diesem Ansatz wird davon ausgegangen, dass jeweils mit einem Finger eine Auswahl vorgenommen wird. Sollten mehrere Finger verwendet werden, bzw. mehrere Finger gleichzeitig, so bedarf es eines anderen Verfahrens.
c) mit Hilfe eines Finger-Trackers werden Finger-Spitzen und/oder die Spitze eines Zeigestabs, erkannt, wobei bei Überlagerung der Finger-Spitzen mit einer virtuellen Taste eine Auswahl vorliegt, wobei die Finger-Spitze ausgewählt wird, die am weitesten im Vergleich zu den anderen hervorsteht. Bei dieser Ausführungsform wird eine Priorität für den Finger definiert, der am weitesten hervorsteht, beziehungsweise dessen Fingerkuppe am weitesten nach oben bzw. hervorragt. In der Regel ist dies der Zeigefinger oder der Mittelfinger, der so erkannt werden kann. Auch bei diesem Ansatz ist vorzugsweise eine Kamera eingesetzt und erlaubt ein Feedback auf der optischen Anzeigeeinheit.
d) mit Hilfe einer/oder mehrerer virtueller Markierungen, die eine virtuelle Taste in der Anzeigeeinheit überlagert, wobei eine Auswahl dann vorliegt, wenn eine erkannte Fingerspitze der Markierung am nächsten ist und/oder sich in einem bestimmten Radius um die virtuelle Markierung befindet. Bei diesem Vorgehen gibt es entsprechende Markierungen, bzw. Markierungs-Kreise, die um die Tasse ausgebildet sind und eine Auswahl ist dann gegeben wenn die Finger innerhalb dieser Kreise anzutreffen sind bzw. am nächsten zu einem Punkt liegen. Auch dies kann durch eine Kamera mit entsprechenden Feedback Eigenschaften für die Anzeigeeinheit implementiert werden.

Ein weiterer Aspekt sind die Vielzahl von Methoden/ Eingabemodalitäten für das Feststellen, ob die Eingabe durch den Benutzer ausgelöst wurde.

Hierbei handelt es sich um Folgende:
a) mit Hilfe eines Moduls zum Empfang von neuronalen Impulsen und/oder Gehirnwellen wird anhand eines zuvor definierten Musters erkannt, ob eine Eingabe ausgelöst werden soll. Hierbei werden entsprechende Sensoren am Benutzer befestigt, die über ein drahtloses oder ein drahtgebundenes Netzwerk mit der erfindungsgemäßen Vorrichtung verbunden ist. Hierbei kann es ein separates Gerät sein oder ein integriertes Gerät. So können zum Beispiel lediglich die Sensoren aus dem Gerät herausgeführt werden, wenn es bereits in Kopfnähe angeordnet ist.
b) mit Hilfe eines Moduls zum Erkennen von Muskelanspannung und/oder -entspannung wird anhand eines zuvor definierten Musters erkannt, ob eine Eingabe ausgelöst werden soll. Auch bei dieser Implementierung wird ein Gerät eingesetzt, das anhand von Strömen oder chemischen Reaktionen am Körper des Benutzers erkennen kann, ob ein Auslösen erfolgen soll. Auch dieses Modul kann über Kabel oder kabelgebundene Netzwerke mit der erfindungsgemäßen Vorrichtung verbunden sein. Hierbei kann es ein separates Gerät sein oder ein integriertes Gerät.
c) mit Hilfe eines Berührungserkennungs-Moduls, das ausgebildet ist, um die Berührung durch eine zweite Hand des Benutzers zu erkennen, die nicht die Auswahl auslöst, insbesondere durch Berührung des Augmented-Reality-Gerätes und/oder durch Berührung oder Drücken eines Elements auf einem weiteren, per beliebiger Netzwerktechnologie mit dem Augmented-Reality-Gerät gekoppelten Gerätes, um so die Eingabe auszulösen. Dieser Berührungssensor kann als Taste oder als Kondensator Kontakt ausgebildet sein, wenn immer das Gerät berührt wird, bzw. die Taste gedrückt wird, dann ist von einem Auslösen auszugehen. So kann mit der einen Hand die Auswahl erfolgen und mit der anderen Hand durch Berührung der erfindungsgemäßen Vorrichtung das Auslösen des Tastendrucks bestimmt werden.
d) mit Hilfe eines Mikrofon-Moduls, zur Aufnahme von Tönen des Benutzers, kann das Auslösen einer Eingabe erfolgen, wenn ein Benutzer durch ein Audiokommando eine Eingabe auslöst.

Auf der Basis dieser Methoden/ Eingabemodalitäten im 1. Schritt und den 2. Schritt kann durch ein Regelwerk oder durch einen Benutzer eine oder mehrere der Methoden/ Eingabemodalitäten miteinander kombiniert werden, so dass das Augmented-Reality-Gerät in einer Vielzahl von Arten eine Auswahl und ein Auslösen erkannt wird. Hierbei wird klargestellt, dass jede Kombination, die dabei möglich ist, Teil dieser Erfindung sein soll und hiermit explizit offenbart ist.

Ein weiterer Teil der Erfindung ist ein Augmented-Reality-Gerät umfassend eine Anzeigeeinheit und eine Kameraeinheit, wobei die Anzeigeeinheit mindestens eine virtuelle Taste darstellt. Dieses Gerät ist gekennzeichnet durch eine
- Auswahleinheit, die ausgebildet ist um festzustellen, welche virtuelle Taste als Eingabe durch einen Benutzer ausgewählt wurde;
- Auslöseeinheit, die ausgebildet ist, um festzustellen, ob die Eingabe durch den Benutzer ausgelöst wurde.

Hierbei kann es sich um Hardware kombiniert mit Software handeln, insbesondere um Prozessoren, die mit einem Betriebssystem zusammenarbeiten, um so die einzelnen Peripheriegeräte anzusteuern. Die einzelnen Module können dabei eine Kombination von Software und Hardware sein und spezifisch für die Geräte, konfiguriert und programmiert sein, wenn sie mit Standard-Hardware arbeiten. Die einzelnen Module können innerhalb des Gerätes angeordnet sein und über entsprechende Schnittstellenbussysteme miteinander kommunizieren, Sie können Sensoren nach außen führen. Auch können es externe Geräte sein, die über Bluetooth, ZigBee, WLAN, USB, oder andere Protokolle und Netzwerktechnologien über die erfindungsgemäßen Geräte miteinander verbunden sind.

Bei den Modulen für das Feststellen, welche virtuelle Taste als Eingabe durch einen Benutzer ausgewählt wurden, sind Folgende zu nennen:
a) ein Augen-Tracker-Modul, das eingerichtet ist, um die virtuelle Taste zu erkennen, auf die der Benutzer seine Augen fokussiert
b) ein Finger-Tracker-Modul, das eingerichtet ist, um Finger-Spitzen und/oder die Spitze eines Zeigestabs zu erkennen, wobei bei Überlagerung der Finger-Spitzen mit einer virtuellen Taste eine Auswahl vorliegt;
c) ein Finger-Tracker-Modul ist eingerichtet, um Finger-Spitzen und/oder die Spitze eines Zeigestabs zu erkennen, wobei bei Überlagerung der Finger-Spitzen mit einer virtuellen Taste eine Auswahl vorliegt, wobei die Finger-Spitze ausgewählt wird, die am weitesten im Vergleich zu den anderen hervorsteht;
d) mit einem Markierungserkenner-Modul, das eingerichtet ist, um einer/oder mehrerer virtueller Markierungen, die eine virtuelle Taste in der Anzeigeeinheit überlagert zu erkennen, wobei eine Auswahl dann vorliegt, wenn eine erkannte Fingerspitze der Markierung am nächsten ist und/oder sich in einem bestimmten Radius um die virtuelle Markierung befindet.

Bei den Modulen zum Feststellen, ob die Eingabe durch den Benutzer ausgelöst wurde sind Folgende zu nennen:
a) ein Modul zum Empfangen von neuronalen Impulsen und/oder Gehirnwellen, das ausgebildet ist, um anhand eines zuvor definierten Musters zu erkennen, ob eine Eingabe ausgelöst werden soll;
b) ein Modul zum Erkennen von Muskelanspannung und/oder - Entspannung, das ausgebildet wird anhand eines zuvor definierten Musters erkannt, ob eine Eingabe ausgelöst werden soll;
c) ein Berührungs-Modul, das eingerichtet ist, um die Berührung durch eine zweite Hand des Benutzers zu erkennen, die nicht die Auswahl auslöst, insbesondere durch Berührung des Augmented-Reality-Gerätes und/oder durch Berührung oder Drücken eines Elements auf einem weiteren, per beliebiger Netzwerktechnologie mit dem Augmented-Reality-Gerätes gekoppelten Gerätes, um eine Eingabe auszulösen;
d) ein Mikrofon, zur Aufnahme von Tönen des Benutzers, wobei ein Benutzer durch ein Audiokommando eine Eingabe auslöst.

Die Implementierung dieser Module wurde bereits oben beschrieben, auch deren mögliche Kombination, die durch einen Benutzer oder durch ein Regelwerk und Umgebungseinflüsse bestimmt werden kann.

### Figuren Beschreibung:

Die Figuren zeigen beispielhafte Ausführungsformen der vorliegenden Erfindung, die detailliert im Folgenden beschrieben werden. Es zeigt:
Fig. 1 den Aufbau des Systems mit 2 Komponenten, wobei die eine Komponente die Auswahl erkennt und die andere das Auslösen der Auswahl.
Figur 2 zeigt den Zusammenhang zwischen dem Benutzer und den einzelnen Komponenten auf.
Figur 3 zeigt eine virtuelle Tastatur und einen Finger, der sich dieser virtuellen Tastatur nähert.
Figur 4 zeigt ein Beispiel, bei dem mehrere Finger sich einem Tastenbereich nähern. Wobei der erste Tastenbereich aufgeteilt ist in einen Funktionsbereich mit einem ersten Punkt, um zum Beispiel große Buchstaben "Shift" zu aktivieren und der andere Bereich ist aufgeteilt in einen Bereich, in dem die Taste auszuwählen ist.

### Beschreibung einer Ausführungsform:

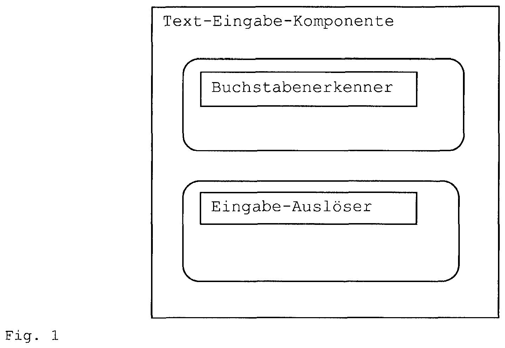

Vorgeschlagen wird ein System gemäß Fig. 1.

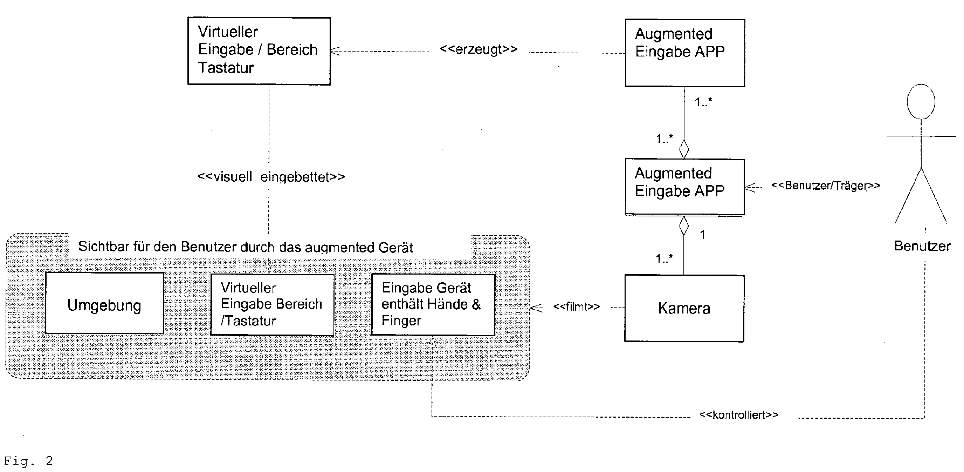

Die Figur 2 zeigt die Zusammenhänge der erfindungsgemäßen Vorrichtung mit der Kamera, die wiederum das Verhalten des Benutzers erfasst und der Erzeugung der virtuellen Tastatur auf den Bildschirm, in dessen Bild das reale Verhalten des Benutzers einfließt.

Dabei wird bei einem Augmented Input-Konzept die Eingabe über eine Augmented Reality in ein Live-Bild eines Augmented Devices eingebettete virtuelle Tastatur derart bedient, dass schnell Texte eingegeben werden können.

Dabei wird die Auswahl des Buchstabens (Komponente "Character Selector") und das Auslesen des gewählten Zeichens (Komponente "Input Selector") getrennt voneinander stattfinden und sogar mittels verschiedener Technologien durchgeführt werden können, die vorzugsweise beliebig kombinierbar sind. Entweder nach Einsatzgebiet oder nach Vorstellungen des Benutzers. Beispiele hierfür werden im Folgenden gegeben.

Eine mögliche, erfolgversprechende Methode dürfte die Kombination aus Eye-Tracker (Character Selector) und Gehirnwellenauslöser/Neural Impulse (Input Executor) sein.

Empfängt bei dem vorliegendem Verfahren die "Text Input Component" einen Impuls (Event) vom "Input Selector", so wird beim "Character Selector" abgefragt, ob von diesem ein Eingabebuchstabe identifiziert werden konnte, und dieser Buchstabe wird dann von der "Text Input Component" in den "Tastaturpuffer" geschrieben.

Bei dem Verfahren sind grundsätzlich zwei Schritte zu unterscheiden. Um mit einem Augmented Device eine Tastatureingabe zu machen, muss
1. die Eingabe eines Buchstabens ausgelöst werden
2. festgestellt werden, welcher Buchstabe eingegeben werden soll.

Wie erwähnt, geschieht dies in zwei unterschiedlichen Komponenten, deren mögliche Ausprägungen in diesem Kapitel beschrieben werden.

Im Folgenden werden die Methoden/ Eingabemodalitäten bzw. Module beschrieben, mit Hilfe derer festgestellt wird, welche Buchstaben eingegeben werden sollen.

### Eye Tracker:

In dieser Ausprägung nutzt der character Selector ein Eye Tracker-Modul/Methode/ Eingabemodalitäten für die Bestimmung des auszuwählenden Buchstabens. Der vom Benutzer mit den Augen fokussierte Buchstabe der virtuellen Tastatur wird als Eingabeelement verwendet, sobald ein Impuls vom Input Executor erfolgt. Wird kein Buchstabe fokussiert, so passiert entweder nichts, oder ggf. eine Fehlermeldung z.B. in Form einer kurz andersfarbig blinkenden Tastatur.

### Der Höchste gewinnt:

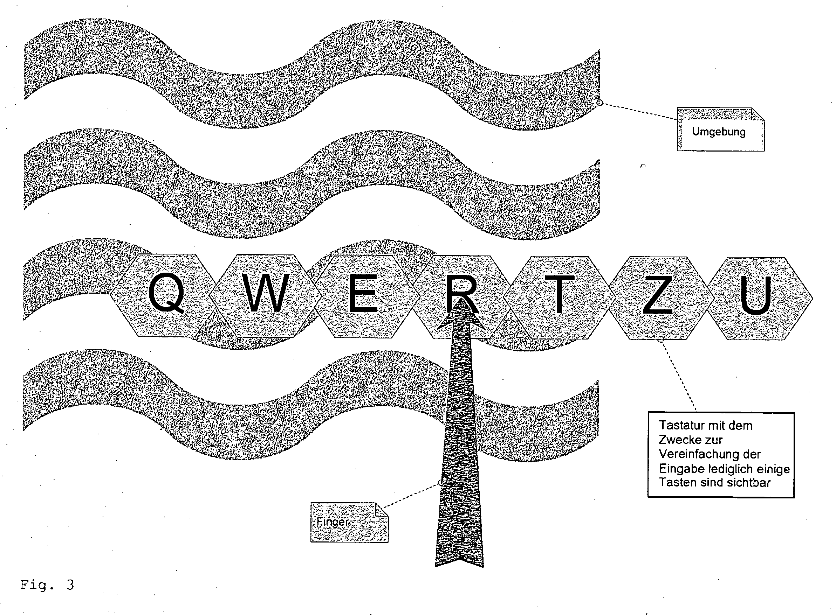

Von dem Character Selector sollen von einem oder mehreren Fingern die Spitzen erkannt werden (alternativ z.B. Spitze eines Zeigestabs oder Marker an den Fingerspitzen von Handschuhen), was mit den heutigen Mitteln zur Bilderkennung keine besonders große Herausforderung darstellt (siehe Fig. 3).

Der Vollständigkeit halber soll erwähnt werden, dass typischerweise die digitalen Zusatzinformationen das Kamerabild überlagern und daher auch das virtuelle Keyboard nicht nur das Environment, sondern auch die Finger visuell überlagert. Um den Blick des Users auf seine Finger nicht zu stören, kann daher das virtuelle Keyboard mit einem Transparenz-Level versehen werden, so dass es (leicht) durchscheinend in das Kamerabild projiziert wird. Dadurch kann der User sowohl das virtuelle Keyboard als auch seine Finger erkennen.

Werden ein oder mehrere Finger vom User visuell über dem virtuellen Keyboard platziert, so werden nur jene Finger berücksichtigt, deren Spitzen sich auf Tasten des virtuellen Keyboards befinden. Sind dies mehr als ein Finger, so wird der Finger ausgewählt, dessen Spitze im Bild als am höchsten erkannt wird. Der Buchstabe, der von dieser Fingerspitze überlagert wird dient als Input-Datum (Sobald ein Impuls vom Input Executor erfolgt). Sind innerhalb einer definierten Toleranz mehr als eine der beschriebenen Fingerspitzen in vergleichbarer Höhe, so erfolgt kein Input; denkbar wäre eine Fehlermeldung, wie ein kurzes Aufflackern der virtuellen Tastatur.

Genauso könnte z.B. "der Tiefste/Seitlichste" gewinnen, obwohl mir dies weniger praktikabel erscheint.

### Nähe zum Mittelpunkt:

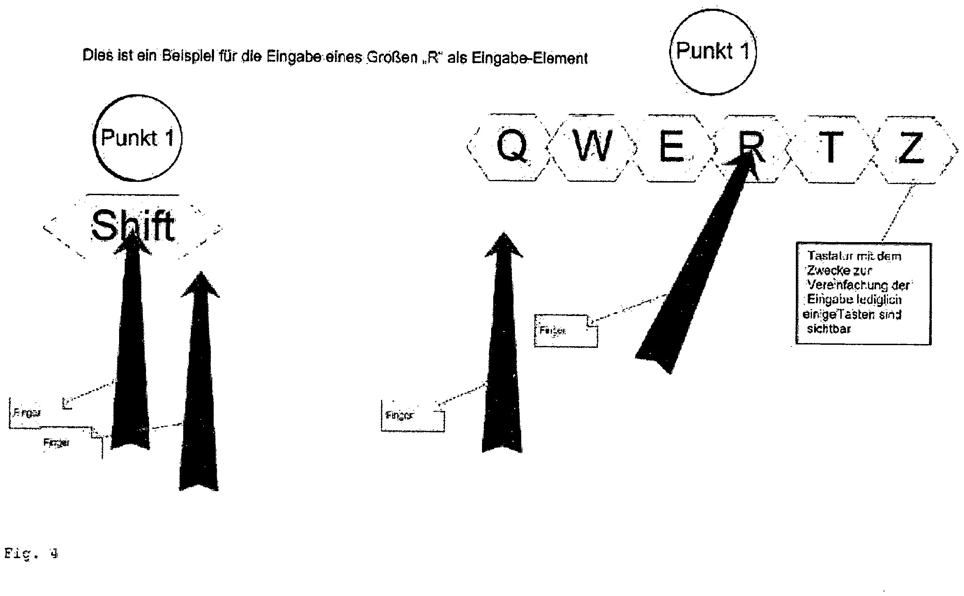

Definiert werden ein oder mehrere Punkte (siehe Fig. 4), die zusätzlich zum GUI sichtbar als digitale Information in das "Kamerabild" eingebettet werden. Als Beispiel soll uns ein virtuelles Keyboard dienen, in dessen Mittelpunkt z.B. ein roter Punkt sichtbar ist.

Ähnlich wie bei Fig. 3 wird nun gemäß Fig.4 jener Buchstabe (bzw. im Fall eines GUIs jenes Input-Element) als Dateneingabe verwendet, dessen überlagernde Fingerspitze dem Mittelpunkt am nächsten ist. Auch die Fehlerbehandlung bei gleichem Abstand mehrerer Fingerspitzen könnte auf ähnlichem Wege erfolgen.

Ebenso könnten mehrere Punkte definiert werden und die einen Buchstaben überlagernde Fingerspitze gewinnen, die die kürzeste Entfernung zu einem der Punkte aufweist.

### Simultane Eingaben:

Aus Geschwindigkeitsgründen kann es notwendig sein, mehr als ein Eingabedatum als Eingabe zu verwenden (z.B. zwei Buttons gleichzeitig) oder eine Zusatzinformation bereitzustellen (z.B. "Hochstelltaste" zusätzlich zu einem Buchstaben auf dem virtuellen Keyboard). Dies kann wie in Fig. 4 mit Hilfe mehrerer "Punkte" realisiert werden. So könnten jene Eingabedaten ausgewählt werden, deren Überlagernde Fingerspitzen den Punkten am nächsten sind. Dabei könnten durch die Punkte unabhängige Eingabebereiche definiert werden, die erst ab unterschreiten einer definierten Distanz aktiv geschaltet werden (z.B. visuell durch Rahmen oder unterschiedliche Farben der Input-Bereiche gekennzeichnet). Wird die definierte Distanz zum jeweiligen "Punkt" nicht unterschritten, werden aus dem zugehörigen Bereich keine Eingabedaten aufgenommen.

Ähnliche simultane Eingaben sind mit dem Prinzip des "höchsten Gewinners" wie in Fig. 3 denkbar, wobei unabhängige Eingabebereiche visuell (z.B. farblich) gekennzeichnet werden könnten.

Im Folgenden werden die Methoden/ Eingabemodalitäten und Module beschrieben, mit denen festgestellt werden soll, ob eine Eingabe ausgelöst wurde.

Wurde über den Character Selector'ein Buchstabe für die Eingabe bestimmt, so muss die Eingabe über den Input Executor ausgelöst werden.

### Folgende Methoden/ Eingabemodalitäten werden in dieser Schrift vorgeschlagen:

### Neural Impulse/Gehirnwellen:

Zusätzlich zur oben erwähnten Hardware wird ein Device für den Empfang von neuralen Impulsen bzw. Gehirnwellen verwendet. Wird von diesem Device ein zuvor definierter bzw. an den Benutzer angepasster neuraler Impuls bzw. ein Gehirnwellenmuster empfangen, so wird vom Input Executor ein entsprechender Input an die Text Input Component gesendet.

Denkbar wäre, zur einfacheren Benutzung zusätzlich zur virtuellen Tastatur, das Bild eines Prominenten oder Verwandten einzublenden, das bei Fokussierung erwiesener Maßen wiedererkennbare Gehirnwellenmuster auslöst.

### Muskelauslösung:

Zusätzlich zur oben erwähnten Hardware wird ein Device zum Erkennen von Muskelanspannung und -entspannung verwendet. Erfolgt ein kurzes Anspannen mit darauffolgendem Entspannen von definierten Muskeln (Bizeps, Kiefern (Zähneklappern), Lippen, Daumen, etc., so wird vom Input Executor ein entsprechender Input an die Text Input Component gesendet.

### Einhandauslösung:

Bei dieser Methode/ Eingabemodalität wird lediglich eine Hand für die Bestimmung des einzugebenden Buchstabens verwendet (bzw. gar keine Hand, falls ein Eye Tracker innerhalb des Character Selectors genutzt wird), die andere Hand löst die Eingabe aus. Dies kann durch Berührung des Augmented Devices geschehen (z.B. kurze Berührung des Brillenrahmens von Google Glass), sowie durch Berührung oder Drücken eines Elements auf einem weiteren, per beliebiger Netzwerktechnologie mit dem Augmented Device gekoppelten Gerät geschehen. Bei jeder kurzen Berührung wird vom Input Executor ein entsprechender Input an die Text Input Component gesendet.

### Tonauslösung:

Ein Mikrofon des Augmented Device nimmt Töne des Benutzers auf. Bei jedem Audiokommando des Benutzers, z.B. "Klick" oder "Tack", wird vom Input Executor ein entsprechender Input an die Text Input Component gesendet.

Abschließend wird ein Feedback an den Benutzer gegeben. Rückmeldung an den Benutzer über erfolgreiche Eingaben sowie Fehlersituationen können sowohl visuell erfolgen (virtuelle Tastatur flackert kurz grün oder rot bzw. wird mit einem Rahmen umgeben oder der eingegebene Buchstabe wird eingefärbt oder vergrößert) als auch z.B. über Vibration des Augmented Device.

## Patentansprüche

1. Ein Eingabeverfahren eines Augmented-Reality-Gerätes, das durch einen Benutzer genutzt wird, umfassend eine Anzeigeeinheit und eine Kameraeinheit, wobei die Anzeigeeinheit eine Vielzahl von virtuellen Tasten auf einem realen Gegenstand abbildet, so dass für den Benutzer der reale Gegenstand durch die virtuellen Tasten überlagert wird, umfassend die Verfahrensschritte:
- Feststellen durch eine Auswahleinheit, welche der virtuellen Tasten zur Eingabe durch den Benutzer ausgewählt wurde;
- Feststellen durch eine Auslöseeinheit, ob eine Eingabe der ausgewählten virtuellen Taste vom Benutzer ausgelöst wurde; **dadurch gekennzeichnet, dass**
eine Vielzahl von Eingabemodalitäten für das Feststellen, welche der virtuellen Tasten zur Eingabe durch den Benutzer ausgewählt wurde, insbesondere umfassend Augen-Tracking, Finger-Tracking,
und
eine Vielzahl von Eingabemodalitäten für das Feststellen, ob eine Eingabe von dem Benutzer ausgelöst wurde, insbesondere umfassend Gehirnwellen/Neuronale-Impulse-Tracking, Muskelanspannungs-Tracking, Berührungserkennung oder ein Mikrofon dem Benutzer bereitgestellt werden,
die miteinander durch eine Konfiguration auf dem Augmented-Reality-Gerät beliebig durch den Benutzer kombiniert werden, um so einem Einsatzgebiet oder Vorstellungen des Benutzer zu entsprechen.

2. Das Eingabeverfahren nach dem vorhergehenden Anspruch, wobei die Vielzahl von virtuellen Tasten eine Tastatur bilden.

3. Das Eingabeverfahren nach einem oder mehreren der vorhergehenden Ansprüche, wobei die Vielzahl von Eingabemodalitäten für das
Feststellen, welche virtuelle Taste als Eingabe durch einen Benutzer ausgewählt wurden, eine oder mehrere der folgenden Eingabemodalitäten umfasst:
a) mit Hilfe eines Augen-Trackers wird die virtuelle Taste erkannt, auf die der Benutzer seine Augen fokussiert
b) mit Hilfe eines Finger-Trackers werden Finger-Spitzen und/oder eine Spitze eines Zeigestabs, erkannt, wobei bei Überlagerung der Finger-Spitzen mit einer virtuellen Taste eine Auswahl vorliegt;
c) mit Hilfe des Finger-Trackers werden die Finger-Spitzen und/oder die Spitze des Zeigestabs, erkannt, wobei bei Überlagerung der Finger-Spitzen mit der virtuellen Taste eine Auswahl vorliegt, wobei die Finger-Spitze ausgewählt wird, die am weitesten im Vergleich zu den anderen hervorsteht;
d) mit Hilfe einer/oder mehrerer virtueller Markierungen, die eine virtuelle Taste in der Anzeigeeinheit überlagert, wobei eine Auswahl dann vorliegt, wenn eine erkannte Fingerspitze der Markierung am nächsten ist und/oder sich in einem bestimmten Radius um die virtuelle Markierung befindet.

4. Das Eingabeverfahren nach einem oder mehreren der vorhergehenden Ansprüche, wobei die Vielzahl von Eingabemodalitäten für das Feststellen, ob eine Eingabe durch den Benutzer ausgelöst wurde, eine oder mehrere der folgenden Eingabemodalitäten umfasst:
a) mit Hilfe eines Moduls zum Empfang von neuralen Impulsen und/oder Gehirnwellen wird anhand eines zuvor definierten Musters erkannt, ob eine Eingabe ausgelöst werden soll;
b) mit Hilfe eines Moduls zum Erkennen von Muskelanspannung und/oder -entspannung wird anhand eines zuvor definierten Musters erkannt, ob eine Eingabe ausgelöst werden soll;
c) mit Hilfe eines Berührungserkennungs-Moduls, das ausgebildet ist, um eine Berührung durch eine zweite Hand des Benutzers zu erkennen, die nicht die Auswahl auslöst, insbesondere durch Berührung des Augmented-Reality-Gerätes und/oder durch Berührung oder Drücken eines Elements auf einem weiteren, per beliebiger Netzwerktechnologie mit dem Augmented-Reality-Gerät gekoppelten Gerät, um so eine Eingabe auszulösen;
d) mit Hilfe eines Mikrofon-Moduls, zur Aufnahme von Tönen des Benutzers, zum Auslösen einer Eingabe, wenn der Benutzer durch ein Audiokommando eine Eingabe auslöst.

5. Ein Augmented-Reality-Gerät, das durch einen Benutzer genutzt wird, umfassend eine Anzeigeeinheit und eine Kameraeinheit, wobei die Anzeigeeinheit eine Vielzahl von virtuellen Tasten auf einem realen Gegenstand abbildet, so dass für den Benutzer der reale Gegenstand durch die virtuellen Tasten überlagert wird, umfassend:
- eine Auswahleinheit umfassend eine Kameraeinheit, die ausgebildet ist, um festzustellen, welche der virtuellen Tasten zur Eingabe durch den Benutzer ausgewählt wurde;
- eine Auslöseeinheit, die ausgebildet ist, um festzustellen, ob eine Eingabe der ausgewählten virtuellen Tasten durch den Benutzer ausgelöst wurde;
**dadurch gekennzeichnet, dass**
eine Vielzahl von Eingabemodalität-Modulen für das Feststellen, welche der virtuellen Tasten zur Eingabe durch den Benutzer ausgewählt wurde, insbesondere umfassend einen Augen-Tracker, einen Finger-Tracker,
und
eine Vielzahl von Eingabemodalität-Modulen für das Feststellen, ob eine Eingabe von dem Benutzer ausgelöst wurde, insbesondere umfassend einen Gehirnwellen/Neuronale-Impulse-Tracker, einen Muskelanspannungs-Tracker, eine Berührungserkennung oder ein Mikrofon, dem Benutzer bereitgestellt sind,
die miteinander durch eine Konfiguration auf dem Augmented-Reality-Gerät beliebig durch den Benutzer kombinierbar sind, um so einem Einsatzgebiet oder Vorstellungen des Benutzer zu entsprechen.

6. Das Augmented-Reality-Gerät nach dem vorhergehenden Geräte-Anspruch, wobei die Vielzahl von virtuellen Tasten eine Tastatur bilden.

7. Das Augmented-Reality-Gerät nach einem oder mehreren der vorhergehenden Geräte-Ansprüche, wobei die Vielzahl von Eingabemodalität-Modulen für das Feststellen, welche virtuelle Taste als Eingabe durch den Benutzer ausgewählt wurde, eine oder mehrere der folgenden Eingabemodalität-Module umfasst:
a) ein Augen-Tracker-Modul, das eingerichtet ist, um die virtuelle Tasten zu erkennen, auf die der Benutzer seine Augen fokussiert
b) ein Finger-Tracker-Modul, das eingerichtet ist, um Finger-Spitzen und/oder eine Spitze eines Zeigestabs zu erkennen, wobei bei Überlagerung der Finger-Spitzen mit der virtuellen Taste eine Auswahl vorliegt;
c) ein Finger-Tracker-Modul, das eingerichtet ist, um Finger-Spitzen und/oder die Spitze des Zeigestabs zu erkennen, wobei bei Überlagerung der Finger-Spitzen mit der virtuellen Taste eine Auswahl vorliegt, wobei die Finger-Spitze ausgewählt wird, die am weitesten im Vergleich zu den anderen hervorsteht;
d) mit einem Markierungserkenner-Modul, das eingerichtet ist, um eine/oder mehrere virtuelle Markierungen, die die virtuelle Taste in der Anzeigeeinheit überlagert zu erkennen, wobei eine Auswahl dann vorliegt, wenn die erkannte Fingerspitze der Markierung am nächsten ist und/oder sich in einem bestimmten Radius um die virtuelle Markierung befindet.

8. Das Augmented-Reality-Gerät nach einem oder mehreren der vorhergehenden Ansprüche, wobei die Vielzahl von Eingabemodalität-Modulen für das Feststellen, ob eine Eingabe durch den Benutzer ausgelöst wurde, eine oder mehrere der folgenden Module umfasst:
a) ein Modul zum Empfangen von neuralen Impulsen und/oder Gehirnwellen, das ausgebildet ist, um anhand eines zuvor definierten Musters zu erkennen, ob eine Eingabe ausgelöst werden soll;
b) ein Modul zum Erkennen von Muskelanspannung und/oder - Entspannung, das ausgebildet ist, um anhand eines zuvor definierten Musters zu erkennen, ob eine Eingabe ausgelöst werden soll;
c) ein Berührungs-Modul, das eingerichtet ist, um eine Berührung durch eine zweite Hand des Benutzers zu erkennen, die nicht die Auswahl auslöst, insbesondere durch Berührung des Augmented-Reality-Gerätes und/oder durch Berührung oder Drücken eines Elements auf einem weiteren, per beliebiger Netzwerktechnologie mit dem Agumented-Reality-Gerät gekoppelten Gerät, um eine Eingabe auszulösen;
d) ein Mikrofon, zur Aufnahme von Tönen des Benutzers, wobei der Benutzer durch ein Audiokommando eine Eingabe auslöst.

9. Das Augmented-Reality-Gerät nach einem oder mehreren der vorhergehenden zwei Ansprüche, umfassend einen Speicherbereich und eine Verarbeitungseinheit.

## Claims

1. Input method of an augmented reality device, used by user, comprising a display unit and a camera unit, wherein the display unit images a multiplicity of virtual keys on a real object such that the real object is overlaid by the virtual keys for the user, comprising the method steps of:
- determining which of the virtual keys was selected by the user for input by way of a selection unit;
- determining whether an input of the selected virtual key was triggered by the user by way of a trigger unit;
**characterized in that**
a multiplicity of input modalities for determining which of the virtual keys was selected by the user for input, in particular comprising eye tracking, finger tracking,
and
a multiplicity of input modalities for determining whether an input was triggered by the user, in particular comprising brainwave/neuronal impulse tracking, muscle tension tracking, touch detection or a microphone, are provided to the user,
said input modalities being combined as desired by the user by way of a configuration on the augmented reality device in order thus to correspond to fields of use or the ideas of the user.

2. Input method according to the preceding claim, wherein the plurality of virtual keys form a keyboard.

3. Input method according to one or more of the preceding claims, wherein the multiplicity of input modalities for determining which virtual key was selected as an input by a user comprises one or more of the following input modalities:
a) the virtual key on which the user focuses their eyes is identified with the aid of an eye tracker,
b) fingertips and/or a tip of a pointer are identified with the aid of a finger tracker, wherein a selection is present in the case of the fingertips lying over a virtual key;
c) the fingertips and/or the tip of the pointer are identified with the aid of a finger tracker, wherein a selection is present in the case of the fingertips lying over the virtual key, wherein the fingertip projecting furthest in comparison with the others is selected;
d) with the aid of one or more virtual markings on which a virtual key is superimposed on the display unit, wherein a selection is present if an identified fingertip is closest to the marking and/or situated within a certain radius around the virtual marking.

4. Input method according to one or more of the preceding claims, when the multiplicity of input modalities for determining whether an input was triggered by the user comprises one or more of the following input modalities:
a) whether an input should be triggered is identified on the basis of a previously defined pattern with the aid of a module for receiving neural impulses and/or brainwaves;
b) whether an input should be triggered is identified on the basis of a previously defined pattern with the aid of a module for identifying muscle tension and/or relaxation;
c) with the aid of a touch identification module embodied to identify touch by a second hand of the user, which does not trigger the selection, in particular by touching the augmented reality device and/or by touching or pressing an element on a further device coupled to the augmented reality device by means of any networking technology, in order thus to trigger an input;
d) with the aid of a microphone module for recording sounds of the user, for triggering an input if the user triggers an input by way of an audio command.

5. Augmented reality device, used by a user, comprising a display unit and a camera unit, wherein the display unit images a multiplicity of virtual keys on a real object such that the real object is overlaid by the virtual keys for the user, comprising
- a selection unit comprising a camera unit, embodied to determine which of the virtual keys was selected by the user for input;
- a trigger unit embodied to determine whether an input of the selected virtual key was triggered by the user;
**characterized in that**
a multiplicity of input modality modules for determining which of the virtual keys was selected by the user for input, in particular comprising an eye tracker, a finger tracker,
and
a multiplicity of input modality modules for determining whether an input was triggered by the user, in particular comprising a brainwave/neuronal impulse tracker, a muscle tension tracker, touch detection or a microphone, are provided to the user, said input modality modules being combinable as desired by the user by way of a configuration on the augmented reality device in order thus to correspond to fields of use or the ideas of the user.

6. Augmented reality device according to the preceding device claim, wherein the plurality of virtual keys form a keyboard.

7. Augmented reality device according to one or more of the preceding device claims, wherein the multiplicity of input modality modules for determining which virtual key was selected as an input by the user comprises one or more of the following input modality modules:
a) an eye tracker module configured to identify the virtual key on which the user focuses their eyes,
b) a finger tracker module configured to identify fingertips and/or a tip of a pointer, wherein a selection is present in the case of the fingertips lying over the virtual key;
c) a finger tracker module configured to identify fingertips and/or the tip of the pointer, wherein a selection is present in the case of the fingertips lying over the virtual key, wherein the fingertip projecting furthest in comparison with the others is selected;
d) comprising a marking identifier module configured to identify one or more virtual markings on which the virtual key is superimposed in the display unit, wherein a selection is present if the identified fingertip is closest to the marking and/or situated within a certain radius around the virtual marking.

8. Augmented reality device according to one or more of the preceding claims, wherein the multiplicity of input modality modules for determining whether an input was triggered by the user comprises one or more of the following modules:
a) a module for receiving neural impulses and/or brainwaves embodied to identify whether an input should be triggered on the basis of a previously defined pattern;
b) a module for identifying muscle tension and/or relaxation, embodied to identify whether an input should be triggered on the basis of a previously defined pattern;
c) a touch module configured to identify touch by a second hand of the user, which does not trigger the selection, in particular by touching the augmented reality device and/or by touching or pressing an element on a further device coupled to the augmented reality device by means of any networking technology, in order thus to trigger an input;
d) a microphone for recording sounds of the user, wherein the user triggers an input by way of an audio command.

9. Augmented reality device according to one or more of the preceding two claims, comprising a storage region and a processing unit.

## Revendications

1. Procédé de saisie d'un appareil de réalité augmentée, lequel est utilisé par un utilisateur, comprenant une unité d'affichage et une unité de caméra, l'unité d'affichage représentant une pluralité de touches virtuelles sur un objet réel, de sorte que pour l'utilisateur, les touches virtuelles sont superposées à l'objet réel, comprenant les étapes suivantes :
- détermination, par une unité de sélection, de laquelle des touches virtuelles a été sélectionnée par l'utilisateur pour la saisie ;
- détermination, par une unité de déclenchement, si une saisie de la touche virtuelle sélectionnée a été déclenchée par l'utilisateur ;
**caractérisé en ce que**
sont fournies à l'utilisateur une pluralité de modalités de saisie pour la détermination de laquelle des touches virtuelles a été sélectionnée par l'utilisateur pour la saisie, comprenant notamment le suivi des yeux, le suivi des doigts,
et
une pluralité de modalités de saisie pour la détermination si une saisie a été déclenchée par l'utilisateur, comprenant notamment le suivi des impulsions d'ondes cérébrales/neuronales, le suivi de la tension musculaire, la détection de toucher ou un microphone,
lesquelles sont combinées entre elles à volonté par l'utilisateur par une configuration sur l'appareil de réalité augmentée afin de correspondre ainsi à un domaine d'utilisation ou à des présentations de l'utilisateur.

2. Procédé de saisie selon la revendication précédente, la pluralité de touches virtuelles formant un clavier.

3. Procédé de saisie selon l'une ou plusieurs des revendications précédentes, la pluralité de modalités de saisie pour déterminer quelle touche virtuelle a été sélectionnée par un utilisateur en tant que saisie comprenant une ou plusieurs des modalités de saisie suivantes :
a) la touche virtuelle sur laquelle l'utilisateur concentre ses yeux est reconnue à l'aide d'un dispositif de suivi des yeux ;
b) les bouts des doigts et/ou une pointe d'une baguette de pointage sont reconnus à l'aide d'un dispositif de suivi des doigts, une sélection ayant lieu lors de la superposition des bouts des doigts avec une touche virtuelle ;
c) les bouts des doigts et/ou la pointe de la baguette de pointage sont reconnus à l'aide du dispositif de suivi des doigts, une sélection ayant lieu lors de la superposition des bouts des doigts avec une touche virtuelle, le bout du doigt qui dépasse le plus loin en comparaison des autres étant sélectionné ;
d) à l'aide d'un/ou plusieurs marquages virtuels qui sont superposés à une touche virtuelle dans l'unité d'affichage, une sélection ayant alors lieu lorsqu'un bout de doigt reconnu est le plus proche du marquage et/ou se trouve dans un rayon défini autour du marquage virtuel.

4. Procédé de saisie selon l'une ou plusieurs des revendications précédentes, la pluralité de modalités de saisie pour la détermination si une saisie a été déclenchée par l'utilisateur comprenant une ou plusieurs des modalités de saisie suivantes :
a) la nécessité de déclencher une saisie est reconnue à l'aide d'un module servant à la réception d'impulsions neurales et/ou d'ondes cérébrales au moyen d'un modèle défini préalablement ;
b) la nécessité de déclencher une saisie est reconnue à l'aide d'un module servant à reconnaître la tension et/ou la détente musculaire au moyen d'un modèle défini préalablement ;
c) à l'aide d'un module de détection de toucher, lequel est configuré pour reconnaître un toucher par une deuxième main de l'utilisateur qui ne déclenche pas la sélection, notamment par un toucher de l'appareil de réalité augmentée et/ou par un toucher ou une pression d'un élément sur un appareil supplémentaire, couplé à l'appareil de réalité augmentée par une technologie de réseau quelconque, afin de déclencher ainsi une saisie ;
d) à l'aide d'un module à microphone destiné à enregistrer des sons de l'utilisateur en vue de déclencher une saisie lorsque l'utilisateur déclenche une saisie par une instruction audio.

5. Appareil de réalité augmentée, lequel est utilisé par un utilisateur, comprenant une unité d'affichage et une unité de caméra, l'unité d'affichage représentant une pluralité de touches virtuelles sur un objet réel, de sorte que pour l'utilisateur, les touches virtuelles sont superposées à l'objet réel, comprenant :
- une unité de sélection comprenant une unité de caméra qui est configurée pour déterminer laquelle des touches virtuelles a été sélectionnée par l'utilisateur pour la saisie ;
- une unité de déclenchement qui est configurée pour déterminer si une saisie de la touche virtuelle sélectionnée a été déclenchée par l'utilisateur ; **caractérisé en ce que**
sont fournis à l'utilisateur une pluralité de modules de modalité de saisie pour la détermination de laquelle des touches virtuelles a été sélectionnée par l'utilisateur pour la saisie, comprenant notamment un dispositif de suivi des yeux, un dispositif de suivi des doigts,
et
une pluralité de modules de modalité de saisie pour la détermination si une saisie a été déclenchée par l'utilisateur, comprenant notamment un dispositif de suivi des impulsions d'ondes cérébrales/neuronales, un dispositif de suivi de la tension musculaire, une détection de toucher ou un microphone,
lesquels peuvent être combinés entre eux à volonté par l'utilisateur par une configuration sur l'appareil de réalité augmentée afin de correspondre ainsi à un domaine d'utilisation ou à des présentations de l'utilisateur.

6. Appareil de réalité augmentée selon la revendication d'appareil précédente, la pluralité de touches virtuelles formant un clavier.

7. Appareil de réalité augmentée selon une ou plusieurs des revendications d'appareil précédentes, la pluralité de modules de modalité de saisie pour déterminer quelle touche virtuelle a été sélectionnée par l'utilisateur en tant que saisie comprenant un ou plusieurs des modules de modalité de saisie suivants :
a) un module de dispositif de suivi des yeux qui est conçu pour reconnaître la touche virtuelle sur laquelle l'utilisateur concentre ses yeux ;
b) un module de dispositif de suivi des doigts qui est conçu pour reconnaître les bouts des doigts et/ou une pointe d'une baguette de pointage, une sélection ayant lieu lors de la superposition des bouts des doigts avec la touche virtuelle ;
c) un module de dispositif de suivi des doigts qui est conçu pour reconnaître les bouts des doigts et/ou la pointe de la baguette de pointage, une sélection ayant lieu lors de la superposition des bouts des doigts avec la touche virtuelle, le bout du doigt qui dépasse le plus loin en comparaison des autres étant sélectionné ;
d) comprenant un module de reconnaissance de marquage qui est conçu pour reconnaître un/ou plusieurs marquages virtuels qui sont superposés à la touche virtuelle dans l'unité d'affichage, une sélection ayant alors lieu lorsque le bout de doigt reconnu est le plus proche du marquage et/ou se trouve dans un rayon défini autour du marquage virtuel.

8. Appareil de réalité augmentée selon une ou plusieurs des revendications précédentes, la pluralité de modules de modalité de saisie pour la détermination si une saisie a été déclenchée par l'utilisateur comprenant un ou plusieurs des modules suivants :
a) un module servant à la réception d'impulsions neurales et/ou d'ondes cérébrales, qui est conçu pour reconnaître, au moyen d'un modèle défini préalablement, s'il est nécessaire de déclencher une saisie ;
b) un module servant à reconnaître la tension et/ou la détente musculaire, qui est conçu pour reconnaître, au moyen d'un modèle défini préalablement, s'il est nécessaire de déclencher une saisie ;
c) un module de toucher, qui est conçu pour reconnaître un toucher par une deuxième main de l'utilisateur qui ne déclenche pas la sélection, notamment par un toucher de l'appareil de réalité augmentée et/ou par un toucher ou une pression d'un élément sur un appareil supplémentaire, couplé à l'appareil de réalité augmentée par une technologie de réseau quelconque, afin de déclencher une saisie ;
d) un microphone destiné à enregistrer des sons de l'utilisateur, l'utilisateur déclenchant une saisie par une instruction audio.

9. Appareil de réalité augmentée selon une ou plusieurs des deux revendications précédentes, comprenant une zone de mémoire et une unité de traitement.
